# EUROPEAN PATENT SPECIFICATION

(11) **EP 3 940 363 B1**
(45) Date of publication and mention of the grant of the patent: **01.03.2023**
(21) Application number: 19918938.2
(22) Date of filing: 21.11.2019
(51) Int. Cl.: G01M 3/28, G01L 7/08, G01L 19/08

(54) **MARINE HOSE FLUID LEAKAGE DETECTOR**
FLÜSSIGKEITSLECKDETEKTOR FÜR MEERESSCHLAUCH
DÉTECTEUR DE FUITE DE FLUIDE DE TUYAU MARIN

(30) Priority: 12.03.2019 JP 2019044365
(43) Date of publication of application: 19.01.2022
(73) Proprietor: The Yokohama Rubber Co., Ltd., Tokyo 105-8685 (JP)
(72) Inventor: TSUKAZAKI Takahiro, Hiratsuka-shi, Kanagawa 254-8601 (JP); ISHIBASHI Yusuke, Hiratsuka-shi, Kanagawa 254-8601 (JP)
(74) Representative: Grünecker Patent- und Rechtsanwälte PartG mbB
(86) International application number: PCT/JP2019/045561
(87) International publication number: WO 2020/183803

(56) References cited:
- EP-A2- 0 064 807
- EP-A2- 1 879 008
- JP-A- H10 148 280
- JP-A- 2001 132 876
- JP-A- 2002 350 111
- JP-A- 2003 021 568
- JP-A- 2007 177 847
- JP-A- 2012 233 558
- JP-A- 2014 122 677
- JP-A- 2014 122 677
- KR-A- 20000 072 443
- US-A- 3 299 417
- US-A- 3 703 879

## Description

### Technical Field

The present invention relates to a fluid leakage detector of a marine hose, and particularly relates to a fluid leakage detector of a marine hose that can more reliably visually determine the occurrence of leakage when a transport fluid leaks into a fluid retention layer formed in a marine hose.

### Background Art

A variety of leak preventing measures have been taken because leakage of the transport fluid to the outside of the hose, such as due to damage to the marine hose, causes significant environmental pollution. For example, a fluid retention layer is provided between reinforcing layers layered on the outer circumference side of the fluid flow path to allow leaked transport fluid to be temporarily stored in the fluid retention layer to prevent leakage to the outside of the hose.

In order to detect transport fluid that has leaked into the fluid retention layer, a fluid leakage detector is known in which, for example, an oil pod is used (see Patent Document 1). In this fluid leakage detector, when the transport fluid leaks into the fluid retention layer, the fluid enters an oil pod through a communication pipe. Accordingly, a detecting body housed inside the oil pod is deformed or becomes wet with the transport fluid. Then, by visually checking, through a window portion provided with the oil pod, the presence or absence or the like of deformation of the detecting body or the presence or absence or the like of wetting of the detecting body, whether fluid leakage has occurred may be determined.

However, accurate visual check from the outside of the state (degree of change) of the detecting body housed inside the oil pod is difficult. In particular, because the visibility in water is poor compared to that above water, it becomes even more difficult to visually check the state of the detecting body.

### Citation List

### Patent Literature

Patent Document 1: JP 2007-177847 A.

JP2014-122677 discloses a leak detector for a marine hose with a detector housing having a window to observe the level of leaking fluid. KR2000-0072443 discloses a manometer using a fiber which position moves depending on pressure so that it contacts a window so the light coming from the optical fiber can be visible outside the sensor housing. EP0064807 discloses a manometer using optical fiber which are deformed by the pressure. US3299417 describes a leak detection system for a double-walled hose with an electrical pressure switch. EP1879008 discloses a leak detector for a marine hose with a detector housing including a fiber where the leaking fluid induces a change of transmission of the optical fiber.

### Summary of Invention

### Technical Problem

An object of the present invention is to provide a fluid leakage detector of a marine hose that can more reliably visually determine the occurrence of leakage when a transport fluid leaks into a fluid retention layer formed in a marine hose.

### Solution to Problem

In order to achieve the object described above, a fluid leakage detector of a marine hose of an embodiment of the present invention includes a communication pipe that communicates with a fluid retention layer formed between reinforcing layers layered on an outer circumference side of a fluid flow path of the marine hose and that extends to a hose surface, a casing having a hollow portion that communicates with the communication pipe and that is disposed on the hose surface, a detecting body housed in the hollow portion, and a window portion isolating the hollow portion from outside the casing, the fluid leakage detector of the marine hose further includes a partition portion formed of a fiber optic plate that is disposed on a surface on the hollow portion side of the window portion, and a movement mechanism that brings the detecting body and the partition portion to be in proximity to or distant from each other by moving at least one of the detecting body or the partition portion in accordance with a change in pressure acting on the hollow portion through the communication pipe.

### Advantageous Effects of Invention

According to embodiments of the present invention, when the transport fluid leaks into the fluid retention layer, pressure acting on the hollow portion of the casing through the communication pipe increases. As a result of this pressure change, at least one of the detecting body housed in the hollow portion or the partition portion moves. Because the partition portion is formed of the fiber optic plate, the detecting body can be visually recognized through the partition portion only when the detecting body is in proximity to the partition portion. In other words, in order to determine whether the transport fluid has leaked into the fluid retention layer, it is only required to check whether the detecting body is visually recognized by visually observing through the window portion, and thus the occurrence of leakage of the transport fluid can be more reliably determined.

### Brief Description of Drawings

FIG. 1 is an explanatory cross-sectional view illustrating a marine hose with a fluid leakage detector according to an embodiment of the present invention.
FIG. 2 is an explanatory diagram illustrating a use state of the marine hose in FIG. 1.
FIG. 3 is an explanatory diagram illustrating the fluid leakage detector in FIG. 1 in a longitudinal cross-sectional view.
FIG. 4 is an explanatory diagram illustrating the fluid leakage detector in FIG. 3 in a plan view.
FIG. 5 is an explanatory diagram illustrating the fluid leakage detector in FIG. 3 when fluid leakage occurs.
FIG. 6 is an explanatory diagram illustrating the fluid leakage detector in FIG. 5 in a plan view.
FIG. 7 is an explanatory diagram illustrating another embodiment of a fluid leakage detector in a longitudinal cross-sectional view.
FIG. 8 is an explanatory diagram illustrating the fluid leakage detector in FIG. 7 in a plan view.
FIG. 9 is an explanatory diagram illustrating the fluid leakage detector in FIG. 7 when fluid leakage occurs.
FIG. 10 is an explanatory diagram illustrating the fluid leakage detector in FIG. 9 in a plan view.

### Description of Embodiments

A fluid leakage detector of a marine hose according to embodiments of the present invention will be described below based on the embodiments illustrated in the drawings.

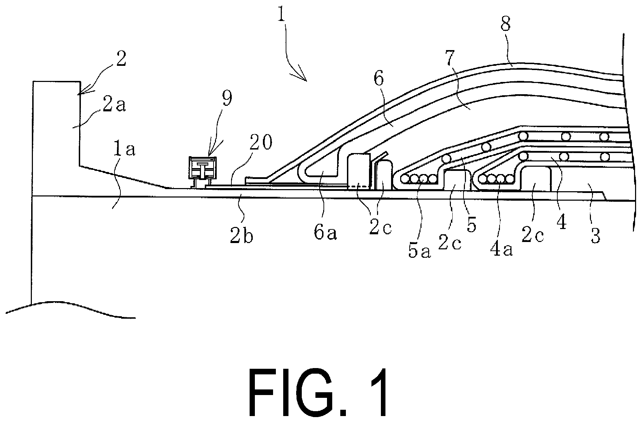

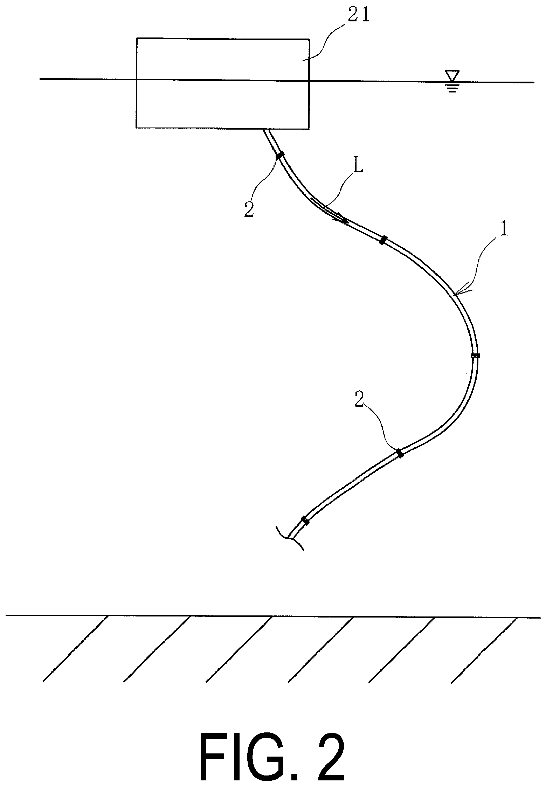

The marine hose 1 illustrated in FIGS. 1 and 2 includes a fluid leakage detector 9 (hereinafter referred to as a detector 9) of an embodiment of the present invention. The marine hose 1 includes, on its each end, a connecting end portion 2 to connect another marine hose 1, and the connecting end portion 2 includes a nipple 2b having a flange 2a at one end. An inner surface rubber layer 3, a main reinforcing layer 4, a body wire layer 5, and an auxiliary reinforcing layer 6 are wound and layered in order from an inner circumference side toward an outer circumference side on an outer circumferential surface of the nipple 2b, and the outermost circumference is covered with a cover rubber layer 8. A fluid retention layer 7 is formed between the body wire layer 5 and the auxiliary reinforcing layer 6 to provide a space. The inner circumference side of the inner surface rubber layer 3 serves as a fluid flow path 1a for a transport fluid L to flow.

The inner surface rubber layer 3 that contacts the transport fluid L is formed of, for example, nitrile rubber or the like having excellent oil resistance. The body wire layer 5 is formed by winding metal wires in a spiral-like manner around a rubber layer of the outer circumference of the main reinforcing layer 4 at predetermined intervals. Each of the reinforcing layers 4, 6 is formed by layering a plurality of reinforcing cord layers in which reinforcing cords are covered with rubber.

The main reinforcing layer 4, the body wire layer 5, and the auxiliary reinforcing layer 6 are fixed to the nipple 2b by respective nipple wires 4a, 5a, and 6a at respective one ends of the layers 4, 5, and 6 and, for example, a fixing ring 2c disposed projecting from the outer circumferential surface of the nipple 2b. The fluid retention layer 7 functions to temporarily store the transport fluid L leaked out from the main reinforcing layer 4. The cover rubber layer 8 is formed of a non-water-permeable material such as rubber and has a line pattern or the like having excellent visibility on the surface of the cover rubber layer 8.

Among marine hoses 1, a submarine hose may be connected to an offshore tanker 21 as illustrated in FIG. 2 to be installed extending vertically in water or installed extending horizontally in a lying state remaining submerged in water. On the other hand, in the case of a floating hose, a buoyant material layer is provided between the layers of the auxiliary reinforcing layer 6 and the cover rubber layer 8 to be installed extending horizontally in a lying state floating on the sea water. The detector 9 of an embodiment of the present invention can be applied to both types of a submarine hose and a floating hose.

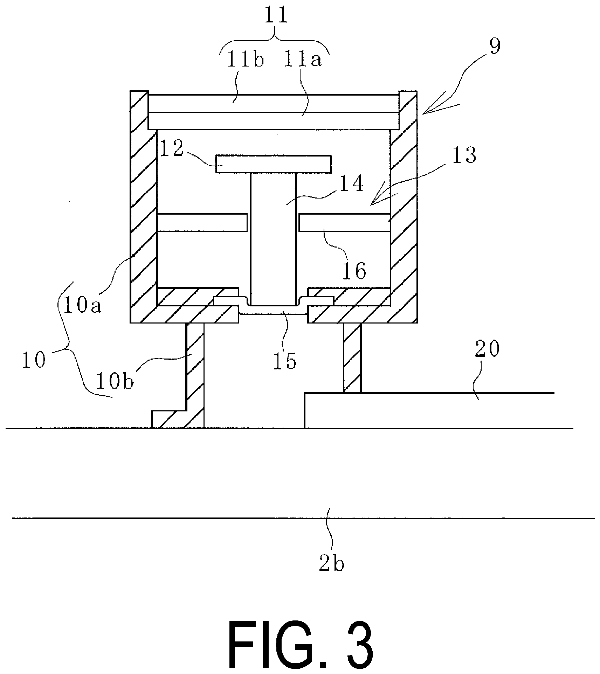

The detector 9 illustrated in FIG. 3 includes a communication pipe 20 that communicates with the fluid retention layer 7 and extends on a hose surface, a casing 10 having a hollow portion, a detecting body 12 housed in the hollow portion of the casing 10, and a window portion 11 isolating the hollow portion of the casing 10 from outside the casing 10. The detector 9 further includes a partition portion 11a disposed on a surface on the hollow portion side of the window portion 11, and a movement mechanism 13.

The casing 10 is attached on the hose surface at a predetermined position by an appropriate fixing member. As in this embodiment, the casing 10 is preferably attached on the exposed outer circumferential surface of the nipple 2b because this stabilizes the casing 10. In this embodiment, the casing 10 includes a housing portion 10a having a hollow portion with a window portion 11, and a filling portion 10b having a hollow portion, and the hollow portions of the portions 10a and 10b are isolated from each other in an airtight or watertight manner by a membrane portion 15 made of rubber or the like.

One end portion of the communication pipe 20 is disposed inside the fluid retention layer 7, and the other end portion is disposed in the hollow portion of the casing 10 (the filling portion 10b). Accordingly, the fluid retention layer 7 and the casing 10 (the filling portion 10b) are in communication via the communication pipe 20.

The window portion 11 includes a partition portion 11a disposed on a surface on the hollow portion side, and a protection portion 11b disposed on an outer surface (a surface on a side opposite to the hollow portion) to cover the partition portion 11a. The partition portion 11a is formed of a fiber optic plate (hereinafter referred to as "FOP").

An FOP is an assembly in which a multiplicity of optical fibers are apposed to form an integrated bundle, and is an optical device having opposite end surfaces oriented in a fiber longitudinal direction. Each of optical fiber includes a core glass and a clad glass on the outer circumference of the core glass, and total reflection occurs at the boundary between the core glass and the clad glass because of difference in refractive indices between the core glass and the clad glass and thus the light travels inside the core glass. Light escaped out of the optical fiber without totally reflecting is absorbed by the absorber glass and does not reach adjacent optical fibers. Therefore, an object that is brought into proximity (contact) with one end surface of the FOP can be visually recognized as an image of the object without compromising resolution at the other end surface of the FOP. On the other hand, when the object is distant from the one end surface of the FOP, the image of the object cannot be visually recognized on the other end surface of the FOP. The detector 9 takes advantage of this characteristics of the FOP.

The protection portion 1 1b layered on the outer surface (upper surface) of the partition portion 11a completely covers the upper surface of the partition portion 11a. The protection portion 1 1b is a transparent plate formed of polycarbonate having excellent shock resistance.

The movement mechanism 13 moves at least one of the detecting body 12 or the partition portion 11a in accordance with a change in pressure P acting on the inside of the casing 10 through the communication pipe 20, and brings the detecting body 12 and the partition portion 11a to be in proximity to or distant from each other. In this embodiment, the movement mechanism 13 moves the detecting body 12 with respect to the partition portion 11a that is fixed in accordance with a change in the pressure P.

Specifically, the movement mechanism 13 includes the membrane portion 15 described above, a rod 14 set to be mounted on the membrane portion 15, and a support portion 16 supporting the rod 14. The support portion 16 includes a through-hole through which the rod 14 is inserted, and supports the rod 14 to be movable in a direction in which the rod 14 is brought to be in proximity to or distant from the partition portion 11a. The detecting body 12 is attached to a tip of the rod 14. The detecting body 12, the rod 14, and the support portion 16 are housed in the hollow portion of the housing portion 10a.

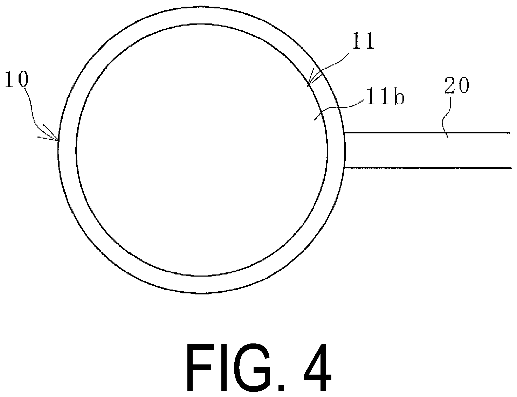

When the marine hose 1 is normal, that is, the main reinforcing layer 4 is not damaged, there is substantially no change in the internal pressure of the filling portion 10b. Therefore, as illustrated in FIG. 3, in the detector 9, as in an initial configuration, the detecting body 12 is disposed at a position spaced apart from the partition portion 11a. Therefore, even when visually observed through the window portion 11 from the outside, the detecting body 12 cannot be visually recognized as illustrated in FIG. 4 because of the characteristics of the FOP that forms the partition portion 11a.

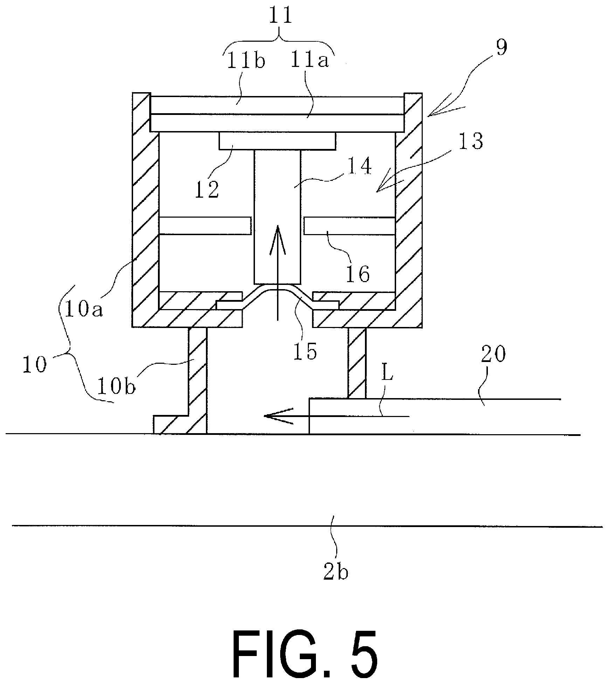

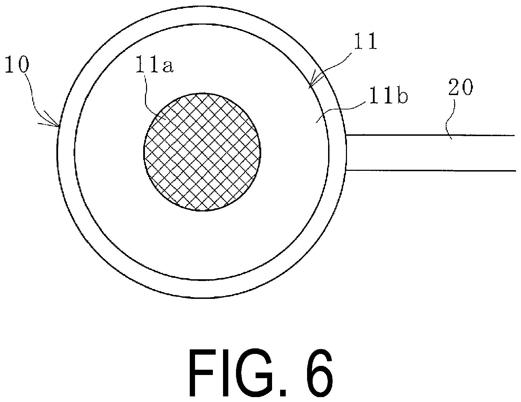

When the main reinforcing layer 4 is damaged and the transport fluid L leaks into the fluid retention layer 7, the leaked transport fluid L flows into the communication pipe 20 as illustrated in FIG. 5. Thereafter, the transport fluid L enters the casing 10 (the filling portion 10b). Leakage of the transport fluid L into the fluid retention layer 7 increases the pressure P acting on the hollow portion of the filling portion 10b through the communication pipe 20. Due to this pressure change, the membrane portion 15 expands (deforms) toward the hollow portion of the housing portion 10a that remains at the initial internal pressure. In cooperation with the expansion of the membrane portion 15, the rod 14 moves in proximity to the partition portion 11a, and thus the detecting body 12 contacts the partition portion 11a. As a result, when the window portion 11 is visually observed through from the outside, as illustrated in FIG. 6, the detecting body 12 can be visually recognized because of the characteristics of the FOP that forms the partition portion 11a. In FIG. 6, the surface of the detecting body 12 is illustrated in a grid-like shape for clarity. The surface of the actual detecting body 12 is preferably colored to be easily visually recognized in water.

When the detecting body 12 is not in proximity to the partition portion 11a, the detecting body 12 cannot be visually recognized through the partition portion 11a. In other words, in order to determine whether the transport fluid L has leaked into the fluid retention layer 7, it is only required to check whether the detecting body 12 is visually recognized by visually observing the window portion 11, and thus, it is advantageous for more reliably determining the occurrence of leakage of the transport fluid L.

As in this embodiment, when the movement mechanism 13 moves only the detecting body 12 of the partition portion 11a and the detecting body 12 in accordance with the change in the pressure P, it is sufficient that the detecting body 12 can simply be moved only in the hollow portion of the casing 10. Accordingly, the detector 9 having a compact and simple structure is easily obtained.

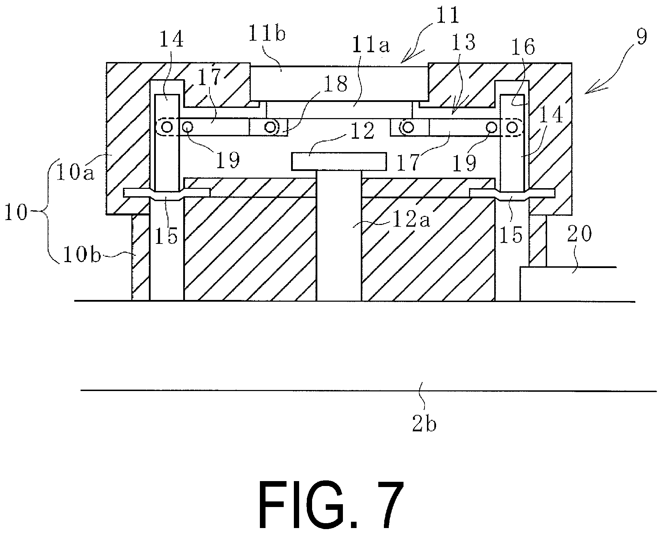

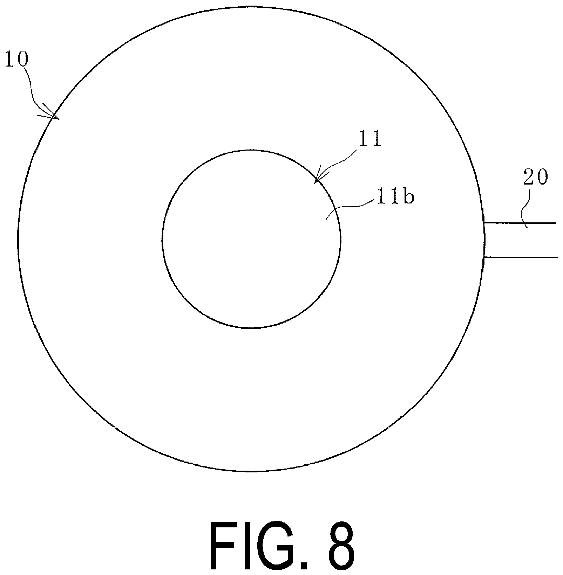

As in an embodiment illustrated in FIGS. 7 and 8, the partition portion 11a can be moved in accordance with the change in the pressure P with respect to the detecting body 12 that is fixed. This embodiment includes a housing portion 10a having a hollow portion with a window portion 11, and a filling portion 10b having a cylindrical hollow portion, and the hollow portions of the portions 10a and 10b are isolated from each other in an airtight or watertight manner by a membrane portion 15.

One end portion of the communication pipe 20 is disposed inside the fluid retention layer 7, and the other end portion is disposed in the hollow portion of the casing 10 (the filling portion 10b). Accordingly, the fluid retention layer 7 and the casing 10 (the filling portion 10b) are in communication via the communication pipe 20.

The window portion 11 includes a partition portion 11a formed of FOP and a protection portion 11b covering an upper side surface of the partition portion 11a. The detecting body 12 is attached to a tip of a supporting column 12a embedded in the filling portion 10b and is disposed in the hollow portion of the housing portion 10a. The detecting body 12 is at a position spaced apart from the partition portion 11a below the partition portion 11a.

The movement mechanism 13 includes the membrane portion 15 described above, a rod 14 set to be mounted on the membrane portion 15, a support portion 16 that supports the rod 14, a mounting table 18 on which the partition portion 11b is mounted, and an arm portion 17 that connects the rod 14 and the mounting table 18 and is axially supported by a support shaft 19. A plurality of the rods 14 are disposed at intervals in the circumferential direction in a plan view.

The support portion 16 has a hole shape that guides each rod 14. The support shaft 19 is disposed between the mounting table 18 having an annular shape and each rod 14. Each of the support shafts 19 allows the arm portion 17 to pivot up and down about the support shaft 19. One end portion of each arm portion 17 is rotatably connected to the mounting table 18 and the other end portion of each arm portion 17 is rotatably connected to the rod 14. The rod 14, the support portion 16, the mounting table 18, the support shaft 19, and the arm portion 17 are housed in the hollow portion of the housing portion 10a.

When the marine hose 1 is normal, that is, the main reinforcing layer 4 is not damaged, in the detector 9, as illustrated in FIG. 7, as in an initial configuration, the partition portion 11a is mounted on the mounting table 18 and above the detecting body 12 that is supported by the supporting column 12a and spaced apart from the detecting body 12. Therefore, even when the window portion 11 is visually observed from the outside, the detecting body 12 cannot be visually recognized as illustrated in FIG. 8 because of the characteristics of the FOP that forms the partition portion 11a.

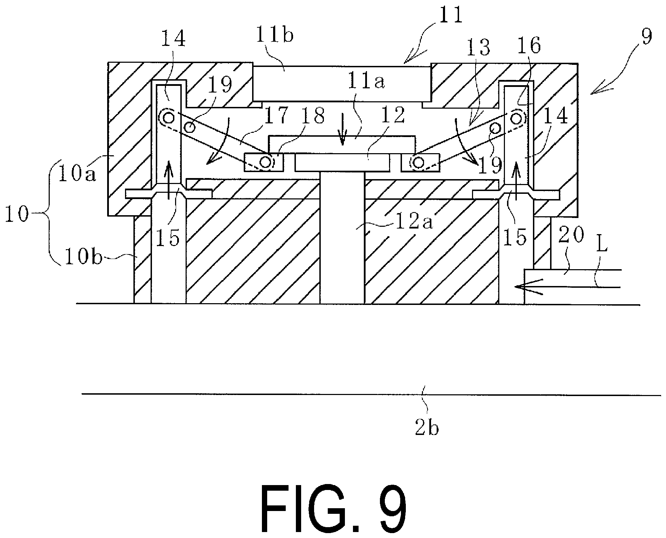

When the main reinforcing layer 4 is damaged and the transport fluid L leaks into the fluid retention layer 7, the pressure P acting on the hollow portion of the filling portion 10b through the communication pipe 20 increases, similar to the previous embodiment. Due to this pressure change, as illustrated in FIG. 9, the membrane portion 15 moves (deforms) toward the hollow portion of the housing portion 10a while the membrane portion 15 remains at the initial internal pressure. When the rod 14 moves upward in cooperation therewith, the arm portion 17 pivots up and down about the support shaft 19. Due to this pivoting of the arm portion 17, the partition portion 11a mounted on the mounting table 18 moves away from the lower surface of the protection portion 11b and in proximity to the detecting body 12, and contacts the detecting body 12. The partition portion 11a is preferably engaged with the mounting table 18 using a guide and guide groove or the like that can slide in the horizontal direction and constrains vertical movement so that the partition portion 11a does not separate vertically with respect to the mounting table 18.

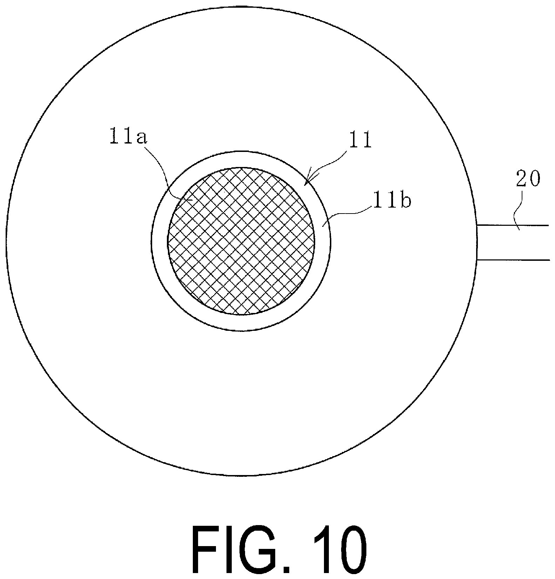

Consequently, when the window portion 11 is visually observed from the outside, the detecting body 12 can be visually recognized as illustrated in FIG. 10 because of the characteristics of the FOP that forms the partition portion 11a. In FIG. 10, the surface of the detecting body 12 is illustrated in a grid-like shape for clarity. The surface of the actual detecting body 12 is preferably colored to be easily visually recognized in water.

As described above, the detector 9 according to an embodiment of the present invention moves the partition portion 11a and the detecting body 12 to be in proximity to or distant from each other to clearly divide states of the detecting body 12 into two states, a state in which the detecting body 12 can be visually recognized and a state in which the detecting body 12 cannot be visually recognized by taking advantage of the characteristics of the FOP. Accordingly, difficulties in the determination of whether the detecting body 12 is in either state by a diver and the like visually observing the window portion 11 from the outside are avoided.

The numerical aperture (N.A.) of the FOP forming the partition portion 11a is greater than or equal to 0.9, and more preferably 1.0. When the numerical aperture (N.A.) is too small, the detecting body 12 is less likely to be visually recognized unless visually observed from the direction orthogonal to the partition portion 11a (the direction viewed from directly above). In other words, when the numerical aperture (N.A.) is greater than or equal to 0.9, the detecting body 12 is easily visually recognized even when visually observed from an oblique direction with respect to the partition portion 11a. Thus, setting the numerical aperture (N.A.) to be greater than or equal to 0.9 or to be 1.0 makes it easy for a diver to visually recognize the detecting body 12.

In the detector 9 illustrated in FIG. 5, the protection portion 1 1b can be omitted, however, the protection portion 11b is preferably provided because the partition portion 11a is prevented from being damaged by foreign materials from the outside or the like. In addition, because the protection portion 11b is formed of polycarbonate, it is difficult for scratches to occur, and it is advantageous to ensure transparency over a long period of time. Accordingly, visual check of the detecting body 12 can be performed stably for a long period of time.

In the case of a submarine hose in which the marine hose 1 is used submerged in water, the detecting body is visually checked by a diver underwater that has poor visibility compared to that above water. In the detector 9 according to an embodiment of the present invention, even underwater, it is only required to visually observe the window portion 11 to check whether the detecting body 12 is visually recognized, it is advantageous to avoid an erroneous recognition (erroneous determination).

The internal structure of the marine hose 1 differs in the number of reinforcing layers and the type of multilayer structures depending on the required performance and is not limited to the structure illustrated in the embodiments. Embodiments of the present invention can be applied to marine hoses 1 of various structures with a fluid retention layer 7.

### Reference Signs List

1 Marine hose
1a Fluid flow path
2 Connecting end portion
2a Flange
2b Nipple
2c Fixing ring
3 Inner surface rubber layer
4 Main reinforcing layer
4a Nipple wire
5 Body wire layer
5a Nipple wire
6 Auxiliary reinforcing layer
6a Nipple wire
7 Fluid retention layer
8 Cover rubber layer
9 Fluid leakage detector
10 Casing
10a Housing portion
10b Filling portion
11 Window portion
11a Partition portion (FOP)
11b Protection portion
12 Detecting body
12a Supporting column
13 Movement mechanism
14 Rod
15 Membrane portion
16 Support portion
17 Arm portion
18 Mounting table
19 Support shaft
20 Communication pipe
21 Tanker

## Claims

1. A fluid leakage detector (9) of a marine hose (1), comprising:
a communication pipe (20) that communicates with a fluid retention layer (7) formed between reinforcing layers (4,6) layered on an outer circumference side of a fluid flow path of the marine hose and extends to a hose surface;
a casing (10) having a hollow portion that communicates with the communication pipe and that is disposed on the hose surface;
a detecting body (12) housed in the hollow portion; and
a window portion (11) isolating the hollow portion from outside the casing;
the fluid leakage detector of the marine hose being **characterized by** further comprising:
a partition portion (11a) formed of a fiber optic plate that is disposed on a surface on the hollow portion side of the window portion; and
a movement mechanism (13) that brings the detecting body and the partition portion to be in proximity to or distant from each other by moving at least one of the detecting body or the partition portion in accordance with a change in pressure acting on the hollow portion through the communication pipe.

2. The fluid leakage detector of the marine hose according to claim 1, wherein the movement mechanism moves the detecting body in accordance with a change in the pressure with respect to the partition portion that is fixed.

3. The fluid leakage detector of the marine hose according to claim 1 or 2, wherein a numerical aperture of the fiber optic plate is greater than or equal to 0.9.

4. The fluid leakage detector of the marine hose according to any one of claims 1 to 3, further comprising a protection portion (11b) made of polycarbonate that covers an outer surface of the partition portion.

5. The fluid leakage detector of the marine hose according to any one of claims 1 to 4, wherein the marine hose is a submarine hose used submerged in water.

## Patentansprüche

1. Ein Fluidleckdetektor (9) eines marinen Schlauchs (1), umfassend:
ein Kommunikationsrohr (20), das mit einer Fluidrückhalteschicht (7) kommuniziert, die zwischen Verstärkungsschichten (4, 6) gebildet ist, die an einer Außenumfangsseite eines Fluidströmungspfads des marinen Schlauchs geschichtet sind, und sich zu einer Schlauchoberfläche erstreckt;
ein Gehäuse (10), das einen hohlen Abschnitt aufweist, der mit dem Kommunikationsrohr kommuniziert, und das an der Schlauchoberfläche angeordnet ist;
einen Detektionskörper (12), der in dem hohlen Abschnitt aufgenommen ist; und
einen Fensterabschnitt (11), der den hohlen Abschnitt von der Außenseite des Gehäuses isoliert;
wobei der Fluidleckdetektor des marinen Schlauchs **dadurch gekennzeichnet ist, dass** er weiterhin umfasst:
einen Trennabschnitt (11a), der von einer faseroptischen Platte gebildet ist, der an einer Oberfläche an der Seite des hohlen Abschnitts des Fensterabschnitts angeordnet ist; und
einen Bewegungsmechanismus (13), der den Detektionskörper und den Trennabschnitt dazu bringt, einander nah zu sein oder voneinander entfernt zu sein, indem er zumindest einen von dem Detektionskörper oder dem Trennabschnitt in Einklang mit einer Änderung des Drucks, der auf den hohlen Abschnitt durch das Kommunikationsrohr wirkt, bewegt.

2. Der Fluidleckdetektor des marinen Schlauchs nach Anspruch 1, wobei der Bewegungsmechanismus den Detektionskörper in Einklang mit einer Änderung in dem Druck bezüglich des Trennabschnitts bewegt, der befestigt ist.

3. Der Fluidleckdetektor des marinen Schlauchs nach Anspruch 1 oder 2, wobei eine numerische Apertur der faseroptischen Platte größer als oder gleich 0,9 ist.

4. Der Fluidleckdetektor des marinen Schlauchs nach irgendeinem der Ansprüche 1 bis 3, weiterhin umfassend einen Schutzabschnitt (11b), der aus Polycarbonat gemacht ist, der eine Außenfläche des Trennabschnitts abdeckt.

5. Der Fluidleckdetektor des marinen Schlauchs nach irgendeinem der Ansprüche 1 bis 4, wobei der marine Schlauch ein submariner Schlauch ist, der in Wasser eingetaucht verwendet wird.

## Revendications

1. Détecteur de fuite de fluide (9) d'un tuyau marin (1), comprenant :
un tuyau de communication (20) qui communique avec une couche de rétention de fluide (7) formée entre des couches de renforcement (4, 6) superposées sur un côté de circonférence externe d'un trajet d'écoulement de fluide du tuyau marin et s'étend vers une surface de tuyau ;
un boîtier (10) ayant une partie creuse qui communique avec le tuyau de communication et qui est disposé sur la surface du tuyau ;
un corps de détection (12) logé dans la partie creuse ; et
une partie fenêtre (11) isolant la partie creuse de l'extérieur du boîtier ;
le détecteur de fuite de fluide du tuyau marin étant **caractérisé en ce qu'**il comprend en outre :
une partie de séparation (11a) formée d'une plaque de fibre optique qui est disposée sur une surface du côté de la partie creuse de la partie de fenêtre ; et
un mécanisme de mouvement (13) qui amène le corps de détection et la partie de séparation à être à proximité ou à distance l'un de l'autre en déplaçant au moins l'un du corps de détection ou de la partie de séparation en fonction d'un changement de pression agissant sur la partie creuse à travers le tuyau de communication.

2. Détecteur de fuite de fluide du tuyau marin selon la revendication 1, dans lequel le mécanisme de mouvement déplace le corps de détection en fonction d'un changement de la pression par rapport à la partie de séparation qui est fixe.

3. Détecteur de fuite de fluide du tuyau marin selon la revendication 1 ou 2, dans lequel une ouverture numérique de la plaque de fibre optique est supérieure ou égale à 0,9.

4. Détecteur de fuite de fluide du tuyau marin selon l'une quelconque des revendications 1 à 3, comprenant en outre une partie de protection (11b) en polycarbonate qui recouvre une surface extérieure de la partie de séparation.

5. Détecteur de fuite de fluide du tuyau marin selon l'une quelconque des revendications 1 à 4, dans lequel le tuyau marin est un tuyau sous-marin utilisé immergé dans l'eau.
